# EUROPEAN PATENT SPECIFICATION

(11) **EP 1 052 743 B1**
(45) Date of publication and mention of the grant of the patent: **07.08.2002**
(21) Application number: 00110370.4
(22) Date of filing: 15.05.2000
(51) Int. Cl.: H01R 35/04, B60R 16/02, H01R 12/12

(54) **Vehicle-mounted rotary connector**
Fahrzeugmontierter Drehverbinder
Connecteur rotatif monté sur un véhicule

(30) Priority: 14.05.1999 JP 13474799
(43) Date of publication of application: 15.11.2000
(73) Proprietor: ALPS ELECTRIC CO., LTD., Ota-ku Tokyo (JP)
(72) Inventor: Matsuzaki, Nobuo, c/o Alps Electric Co.,Ltd., Tokyo (JP)
(74) Representative: Klunker . Schmitt-Nilson . Hirsch

(56) References cited:
- DE-A- 19 750 103
- US-A- 5 562 466
- US-A- 5 683 259
- US-A- 5 865 634

## Description

### BACKGROUND OF THE INVENTION

### Field of the Invention

The present invention relates to a vehicle-mounted rotary connector suitable for use as an electrical connecting means of an air bag system in a steering system for motor vehicles and, more particularly, to a vehicle-mounted rotary connector in which a plurality of flexible cables are stowed in a cable housing space defined between a pair of housings, such as for example disclosed in US-A-5 865 634.

### Description of Related Art

A vehicle-mounted rotary connector installed in a steering system of an motor vehicle has been in wide use as an electrical connecting means of an air bag inflator mounted in a steering wheel the number of revolutions of which is limited. The rotary connector is comprised mainly of a belt-shaped flexible cable having a plurality of conductors between two insulating base films and a pair of housings (a fixed housing and a movable housing) which are concentrically arranged and rotatably connected with each other. The flexible cable is stowed in a windable and unwindable state in the cable housing space defined between the pair of housings.

As this type of rotary connector, there have been known two types: one is that the flexible cable is wound and stowed in a spiral form, and the other is that the flexible cable is stowed with the direction of its winding reversed halfway. Of these types, the rotary connector of the latter reversed winding type has the advantage that the length of the flexible cable required can be decreased as compared with that of the former type.

In the reversed type vehicle-mounted rotary connector, only one flexible cable is generally incorporated. Presently, however, it is becoming a common practice to use such a rotary connector that, as disclosed for instance in US-A-5 865 634, a plurality of flexible cables are each stowed in a wound state to enable an increase in the number of air bag circuits mounted on an motor vehicle and the number of switch circuits incorporated in the steering system.

The flexible cable is stowed in a wound or folded state in the cable housing space and accordingly receives an external force resulting from repeated winding or unwinding, and therefore the conductor formed on the base film is liable to breakage. On the other hand, the air bag circuit is an important safety component; therefore in the event of break of an air bag circuit conductor, it is essential to immediately inform the driver of the break. For this purpose, therefore, the air bag circuit for motor vehicles incorporates a break diagnosis and check system. The check system functions to automatically detect the presence or absence of the break by supplying a little electric current to the air bag circuit conductor in which a large current will flow in case the air bag is used, giving the driver a warning if the break is detected.

However, other circuits than the air bag circuit are relatively less demanded to secure reliability, and therefore do not incorporate the break diagnosis and check system. Of course not all of these circuits routed through the vehicle-mounted rotary connector require a safety device such as the break diagnosis and check system. For such important circuits that will give an adverse effect to driving performance and safety of an motor vehicle because of a trouble, it is desirable to take some necessary measure capable of quickly detecting a conductor break like in the air bag circuit if not during use.

### SUMMARY OF THE INVENTION

In view of the above-described disadvantage inherent in the heretofore known techniques, it is an object of the present invention to provide a vehicle-mounted rotary connector which is capable of quickly detecting the break of a conductor of a flexible cable used in other important circuits as well as the air bag circuit.

In order to overcome the above-described disadvantage, the vehicle-mounted rotary connector of the present invention includes a pair of housings concentrically arranged to define a cable housing space and relatively rotatably connected, and a plurality of flexible cables stowed in a windable and unwindable state in the cable housing space and fixed at their both ends in the pair of housings; and a plurality of conductors, e.g. two or three, corresponding to a plurality of air bag circuits mounted on a motor vehicle, are collectively arranged in one of said flexible cables. The same flexible cable of the vehicle-mounted rotary connector can be supervised by means of a plurality of break diagnosis and check systems incorporated for a plurality of air bag circuits. Therefore, other conductors for important circuits which, in case of a trouble, will give an adverse effect to the driving performance and safety of the motor vehicle are also arranged collectively in a single flexible cable including conductors for a plurality of air bag circuits. By thus forming the flexible cable, it is possible to detect the presence or absence of a break of the other conductors. That is, when the plurality of break diagnosis and check systems supervising the single flexible cable have each detected the break of air bag circuit conductors arranged correspondingly thereto, other circuit conductors formed in the same flexible cable can be diagnosed to have been broken.

In this case, the wiring of a circuit formed through the flexible cable can be simplified by mutually adjacently arranging a plurality of air bag circuit conductors in one flexible cable. As a substitute for the above-described arrangement of circuit conductors, other circuit conductors may be interposed between the plurality of air bag circuit conductors to fully separate the air bag circuit conductors from each other in which a large current flows during use, thereby enabling reliably preventing a short-circuit trouble.

In such a vehicle-mounted rotary connector, it is desirable to connect a lead block having a connecting terminal for connecting an external connector to the end portion of each flexible cable, and to attach the lead block to a given portion of the housing, to thereby insure easy electrical connection of the rotary connector to external equipment. Furthermore, in the case of the lead block fitted with a shorting bar which contacts the connecting terminal to thereby prevent the electrical charge of the flexible cable, no hazard such as an accidental inflation of the air bag will occur if the static electricity is built up during transport in the air bag circuit conductors of the flexible cable and the electric current flows into the air bag inflator when an external connector is connected to the lead block. That is, it is possible to prevent an accident. Furthermore, the shorting bar, being formed as one body itself, is easy to handle and is attached to the lead block.

Other objects, together with the foregoing, are attained in the embodiments described in the following description and illustrated in the accompanying drawings.

### BRIEF DESCRIPTION OF THE DRAWINGS

Fig. 1 is a plan view of a vehicle-mounted rotary connector pertaining to an embodiment;
Fig. 2 is a partly explanatory view of a flexible cable stowed in a wound state in the rotary connector pertaining to the embodiment;
Fig. 3 is a plan view of a lead block incorporated in the vehicle-mounted rotary connector pertaining to the embodiment;
Fig. 4 is a side view of the connecting terminal side of the lead block shown in Fig. 3;
Fig. 5 is a sectional view of a major portion showing operation of a shorting bar with an external connector attached to the lead block;
Fig. 6 is a side view as viewed from the opening side of the lead block fitted with the shorting bar;
Fig. 7 is a sectional view of the lead block showing the shorting bar in a plan.

### DESCRIPTION OF THE PREFERRED EMBODIMENTS

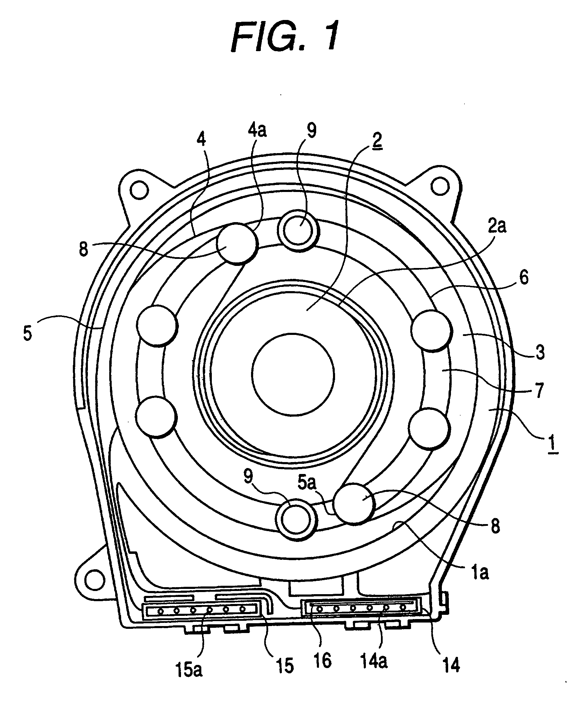

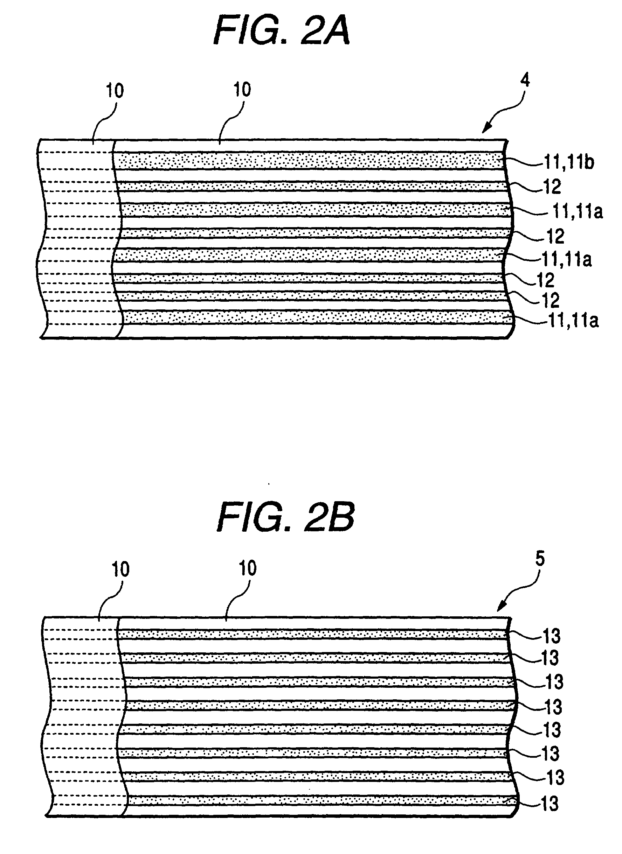

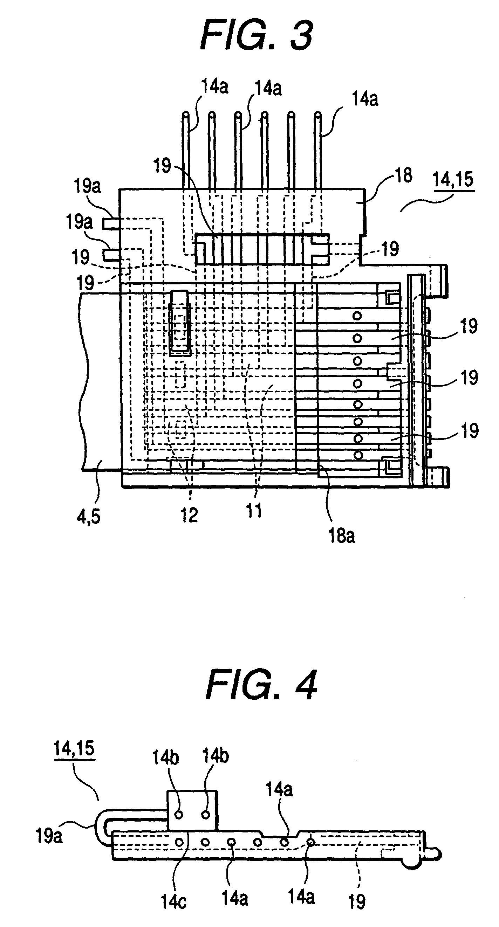

Referring to Figs. 1 to 4, one embodiment of the present invention will be explained. Fig. 1 is a plan view showing the internal structure of a vehicle-mounted rotary connector pertaining to the present embodiment; Fig. 2 is a partly explanatory view showing one flexible cable stowed in a wound state in the rotary connector; Fig. 3 is a plan view of a lead block connected to one or both ends of the flexible cable; and Fig. 4 is a side view on the output terminal side of the lead block.

The vehicle-mounted rotary connector shown in Fig. 1 is comprised roughly of a fixed housing 1 fixedly attached to an unillustrated stator member of a steering system of a motor vehicle, a movable housing fixedly attached to an unillustrated steering wheel which a rotor member of the steering system rotatably and concentrically mounted in relation to the fixed housing 1, a first flexible cable 4 and a second flexible cable 5 stowed in approximately the same wound state in an annular cable housing space 3 defined between a wall surface 1a of an outer tube portion of the fixed housing 1 and a wall surface 2a of an inner tube portion of the movable housing 2, and a moving member 6 disposed in the housing space 3. The moving member 6 is composed of a plurality of rollers 8 and a fixed tube 9 arranged on a rotatable annular rotary plate 7.

Either of the first and second flexible cables 4 and 5 is a belt-like member having a plurality of copper conductors (lead wires) sandwiched between two base films 10 made of an insulating material and laminated for insulation among conductors. The first flexible cable 4, as shown in Fig. 2A, includes air bag circuit conductors 11 for three circuits and conductors 12 for other important circuits. The second flexible cable 5, as shown in Fig. 2B, has conductors 13 for an air-conditioning circuit, an audio circuit, etc. which will not give any immediate adverse effect to the driving performance and safety of the motor vehicle. Of the air bag circuit conductors 11 of the first flexible cable 4, reference numeral 11a denotes a positive-side conductor, while reference numeral 11b, a negative-side conductor. The negative-side conductor 11b for three circuits are collected into one conductor to thereby decrease the total number of conductors 11. In the flexible cable 4, conductors 12 for other circuits are arranged between the negative-side conductor 11b and the positive-side conductors 11a, and between the positive-side conductors 11a, so that the air bag circuit conductors 11 in which a large current flows during use are arranged apart from each other, to thereby prevent an accident of a short-circuit.

One end of the first flexible cable 4 is connected to a lead block 14 shown in Figs. 3 and 4. The lead block 14 is attached to the fixed housing 1. The conductors 11 and 12 of the first flexible cable 4 are each electrically led out of the fixed housing 1 through a connecting terminal 14a provided on the lead block 14. Similarly, one end of the second flexible cable 5 is also connected to a similar lead block 15, so that each conductor 13 of the second flexible cable 5 is electrically led out of the fixed housing 1 through an output terminal 15a of the lead block 15. The other end of either of the first and second flexible cables 4 and 5 is also connected to the same type, or a different type, of lead block shown in Figs. 3 and 4 though not shown, and the lead blocks are each attached to a specific part of the movable housing 2. The first and second flexible cables 4 and 5 are stowed in a windable and unwindable condition in the cable housing space 3. The cables are wound clockwise as viewed in the drawing, toward the outside in a diametrical direction along the wall surface 1a of the outer tube portion, and reversed halfway in a U-shape along the roller 8, thus forming reversing portions 4a and 5a. Thereafter, the cables are wound counterclockwise toward the inside in a diametrical direction along the wall surface 2a of the inner tube portion.

The lead blocks 14, 15 are each composed of eight metal pieces 19 arranged correspondingly to eight conductors 11, 12, 13 carried in the flexible cables, and a resin portion 18, for integrally molding each of these metal pieces 19 as shown in Figs. 3 and 4. In a part of the resin portion 18, there is formed a connecting window 18a for connecting the conductors 11 and 12, 13 of the flexible cables 4, 5 to each metal piece 19; and from the upper side of the resin portion 18, connecting terminals 14a, 14b are protruding outward for connecting each of the conductors 11, 12, 13 to the external connector. The lead block 14, 15 may be divided into a large block from which six connecting terminals 14a made by processing one end portion of six metal pieces 19 are projected, an extended portion 19a of two metal pieces 19 which are extended and bent outward of the large block, and a small block from which two connecting terminals 14b made by processing one end portion of two metal pieces 19 having these extended portions 19a are projected. The small block is placed on the large block, and positioned by a positioning portion 14c.

To connect the flexible cable 4, 5 to the lead block 14, 15, the base film 10 is partly stripped to expose the conductors 11 and 12 at the end portion of the flexible cable 4, 5; and the thus exposed conductors 11, 12 are aligned with the metal pieces 19 arranged on the lead block 14, 15 through the connecting window 18a provided in the resin portion 18, and then joined to the metal pieces 19 by spot welding or ultrasonic welding.

Next, operation of the above-described vehicle-mounted rotary connector will be briefly explained. When a steering wheel not shown of a steering system firmly securing the movable housing 2 is turned clockwise in Fig. 1 from the neutral position, the reversing portions 4a, 5a of the first and second flexible cables 4, 5 move in the clockwise direction by a less amount of rotation than the movable housing 2, to thereby drive the moving body 6. With the driving of the moving body 6, the flexible cables 4, 5 are let out by about twice as long as the amount of movement of the reversing portions 4a, 5a from the wall surface 2a side of the inner tube portion, being wound back on the wall surface 1a side of the outer tube portion. Reversely, when the steering wheel is turned counterclockwise in the drawing from the neutral position, the reversing portions 4a, 5a of the first and second flexible cables 4, 5 move counterclockwise by a less amount of rotation than the movable housing 2 to drive the moving body 6, and accordingly the flexible cables 4, 5 are fed out by about twice as long as the amount of movement of the reversing portions 4a and 5a, being wound onto the wall surface 2a side of the inner tube.

In the vehicle-mounted rotary connector of the present embodiment which needs two flexible cables 4, 5, the air bag circuit conductors 11 for three circuits are collectively incorporated in one flexible cable 4, and the conductors 12 corresponding to other important circuits than the air bag circuit are arranged in the flexible cable 4. The same flexible cable 4 can be supervised by means of a plurality of unillustrated break diagnosis and check systems incorporated in each air bag circuit. Therefore, the presence or absence of a break of other circuit conductors 12 than the air bag circuit conductor 11 can also be detected by utilizing these break diagnosis and check systems. That is, when any of the plurality of break diagnosis and check systems which supervise the first flexible cable 4 has detected a break of a corresponding air bag circuit conductor 11, the other circuit conductor 12 formed in the same flexible cable 4 may be judged to be defective. It is therefore possible to quickly detect the presence or absence of a break of the conductors 11, 12 in the flexible cable 4 corresponding to important circuits which are likely to give an adverse effect to the driving performance and safety of the motor vehicle, thereby enabling to improve reliability in driving safety. In the present embodiment, the lead block 14, 15 includes the large block and the small block. The small block turned back to the back side of the large block is employed, and therefore the number of connecting terminals can be increased without increasing the total number of the lead blocks, and accordingly the rotary connector can be decreased both in size and in cost.

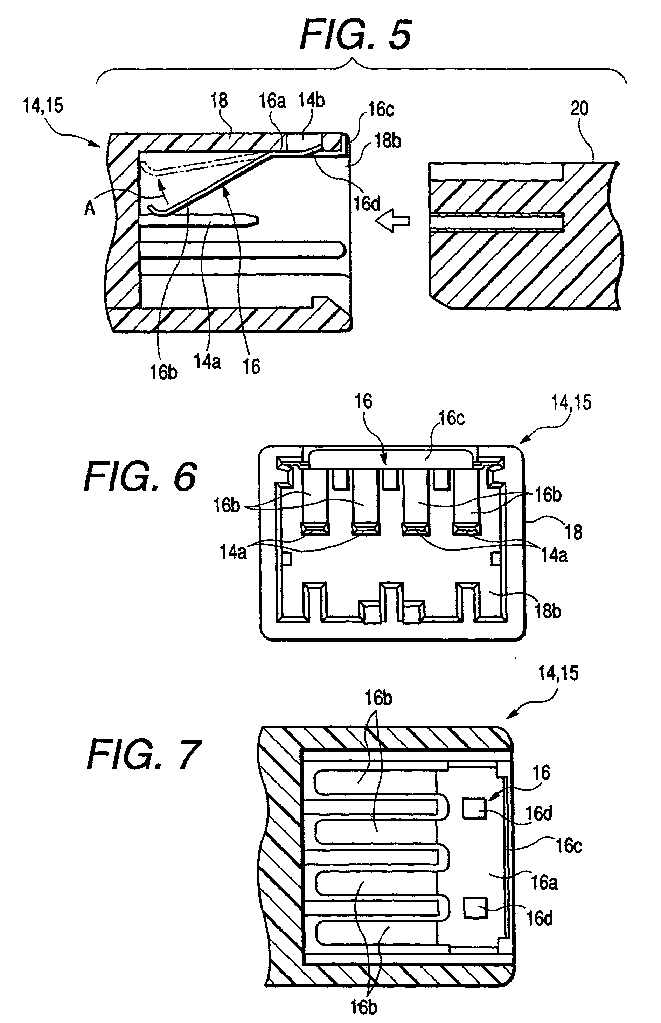

Next, other embodiments of the present invention will be explained with reference to Figs. 5 to 7. The rotary connector of the present embodiment features the provision of a shorting bar which prevents the flexible cable in the lead block from being electrically charged. Fig. 5 is a sectional view of a major portion showing operation of the shorting bar with an external connector attached to the lead block; Fig. 6 is a side view from the opening side of the lead block fitted with the shorting bar; and Fig. 7 is a sectional view of the lead block showing the shape of the shorting bar in a plan.

In Fig. 5, numerals 14 , 15 denote the lead blocks; numeral 18 denotes its resin portion; numeral 16 refers to the shorting bar located in the resin portion 18; and numeral 20 indicates an external connector connected to the lead blocks 14, 15. The lead blocks 14, 15 of the present embodiment have a space 18b formed for insertion of the external connector into the resin portion 18; in this space 18b, four connecting terminals 14a are provided.

The shorting bar 16 , as shown in Figs. 5 to 7, is comprised of a base portion 16a, four contact portions 16b bent downward from one side of the base portion 16, a first mounting portion 16c bent vertically upward from the other side of the base portion 16a oppositely to the side where the contact portion 16b is formed, and a second mounting portion 16d with the forward end portion formed about at the central portion of the base portion 16a and erected upright toward the first mounting portion 16c. All these sections are formed unitarily from an elastic electrically conductive material.

The base portion 16a is formed to such a size that it can be fitted in the space 18b formed in the resin portion 18 of the lead blocks 14, 15 as shown in Figs. 5 to 7.

Four contact portions 16b, as shown in Fig. 6, are formed to about the same width and pitch as the connecting terminals 14a formed in the lead blocks 14, 15 so as to contact the four connecting terminals 14a respectively. The bending angle θ of the contact portion 16b in relation to the base portion 16a, as shown in Fig. 6, is so set that when the base portion 16a is attached to the inner surface of the resin section 18, the forward end portion of the contact portion 16b contacts the connecting terminal 14a and is elastically deformed. In the present embodiment, the same number of contact portions 16b as the connecting terminals 14a are formed on the shorting bar 16. It is sufficient if the shorting bar 16 contacts only the connecting terminal which is connected with the air bag circuit conductor 11 which, if electrically charged, will become defective. When not all of the connecting terminals 14a on the lead bocks 14, 15 are connected to the air bag circuit conductors 11, the contact portion 16b may be placed in elastic contact only with the connecting terminal to which the air bag circuit conductor 11 is to be connected.

The first mounting portion 16c is formed to a size capable of its engagement with the end face of the resin section 18, and the second mounting portion 16d is formed to a size so as to fit in the locking hole 14b made in the resin section 18. The set clearance between the first and second mounting portions 16c and 16d is adjusted to a little narrower size than the set clearance between the end face of the resin section 18 and the wall surface of the locking hole 14b located oppositely thereto.

The shorting bar 16 thus configured is engaged, at the first mounting portion 16c, with the end face of the resin section 18 and elastically contacts the connecting terminal 14a, at the forward end portion of the contact portion 16b. In this state, the second mounting portion 16d is snapped in the locking hole 14b, and the base portion 16a is firmly attached on the inner surface of the resin section 18 to thereby form integrally with the lead blocks 14, 15.

When connecting the external connector 20, the forward end portion 20a of the external connector 20 pushes up the contact portion 16b of the shorting bar 16 in the direction of the arrow A away from the connecting terminal 14a as shown in Fig. 5. Each of the connecting terminals 14a, therefore, can automatically return to an electrically independent position, thus allowing normal connection between the lead blocks 14, 15 and the external connector 20.

The rotary connector of the present embodiment has the same advantage as the rotary connector previously stated, having the shorting bar 16 on the lead blocks 14, 15. Therefore there takes place no accumulation of the static electricity in the connecting terminal 14a during transport, thus enabling to prevent accidental inflation of the air bag at the time of connection of an external connector. Furthermore, the shorting bar 16 is automatically disconnected from the connecting terminal 14a by means of the operation of the external connector 20. It is, therefore, unnecessary to remove the shorting bar 16, thereby enabling to improve an assembling efficiency in installing the vehicle-mounting rotary connector to a motor vehicle.

The vehicle-mounted rotary connector of the present invention configured as previously explained has the following advantages.

In the vehicle-mounted rotary connector which requires two flexible cables or more containing a plurality of conductors, conductor groups corresponding to a plurality of air bag circuits , e.g., air bag circuit conductors for two or three circuits, are collectively arranged in one flexible cable. Therefore, it is possible to supervise one flexible cable by means of a plurality of break diagnosis and check systems incorporated in the plurality of air bag circuits. Therefore, the presence or absence of a conductor break can be detected, improving reliability, by collectively arranging conductors in one flexible cable correspondingly to other important circuits than the air bag circuit which are likely to give an adverse effect to the driving performance and safety of the motor vehicle.

At this time, the plurality of air bag circuit conductors in one flexible cable are mutually adjacently arranged, so that the wiring of a circuit routed through the flexible cable can be simplified. Furthermore, other circuit conductors are arranged between the plurality of air bag circuit conductors, so that the air bag circuit conductors where a large current flows during use are arranged at substantially wide intervals, thereby enabling reliably preventing a short-circuit trouble.

Furthermore,external equipment can easily be connected to the rotary connector by connecting the lead block to the end portion of one flexible cable including a plurality of air bag circuit conductors and then by connecting an external connector to the lead block, thereby improving an efficiency of installation of external equipment mounted on a motor vehicle to the rotary connected mounted on the motor vehicle.

Furthermore, if the shorting bar is provided to prevent the flexible cable from being electrically charged when the lead block contacts the connecting terminal, it is possible to prevent the static electricity from building up in the connecting terminal during transport, and accordingly to prevent accidental inflation of the air bag at the time of connection of the external connector. Furthermore, the shorting bar, formed in one body itself, can readily be handled, insuring an improved assembling efficiency in installing the shorting bar to the lead block.

## Claims

1. A vehicle-mounted rotary connector, comprising: a pair of housings (1, 2) concentrically arranged to define a cable housing space (3) and relatively rotatably connected, and a plurality of flexible cables (4, 5) stowed in a windable and unwindable state in said cable housing space and fixed at their both ends in said pair of housings; **characterised in that** a plurality of conductors (11) corresponding to a plurality of air bag circuits mounted on a motor vehicle are collectively arranged in one of said flexible cables (4).

2. A vehicle-mounted rotary connector as claimed in claim 1, wherein said air bag circuit conductors (11) for two circuits are collectively arranged in one of said flexible cables (4).

3. A vehicle-mounted rotary connector as claimed in claim 1, wherein said air bag circuit conductors (11) for three circuits are collectively arranged in one of said flexible cables.

4. A vehicle-mounted rotary connector as claimed in any of claims 1 to 3, wherein said plurality of air bag circuit conductors (11) are mutually adjacently arranged in one of said flexible cables.

5. A vehicle-mounted rotary connector as claimed in any of claims 1 to 4, wherein, between said plurality of air bag circuit conductors (11), other circuit conductors (12) are interposed, and a group of said conductors is arranged in one of said flexible cables (4).

6. A vehicle-mounted rotary connector as claimed in any of claims 1 to 5, wherein said plurality of air bag circuit conductors (11) arranged in one flexible cable (4) stated above are comprised of the same number of positive-side conductors (11a) as said air bag circuits mounted on a motor vehicle, and a less number of negative-side conductors (11b).

7. A vehicle-mounted rotary connector as claimed in any of claims 1 to 6, wherein a lead block (14) is provided with connecting terminals (14a) for connecting an external connector to the end portion of said flexible cable (4), and said lead block is attached to a given portion of said housing.

8. A vehicle-mounted rotary connector as claimed in any of claims 1 to 7, wherein in said lead block is installed a shorting bar (16) which contacts said connecting terminals, to thereby prevent electrical charging of said flexible cable.

9. A vehicle-mounted rotary connector as claim in claim 8, wherein said shorting bar (16) is held in contact with each of said plurality of connecting terminals (14a) to which said air bag circuit conductors (11) are connected.

10. A vehicle-mounted rotary connector as claimed in claim 8 or 9, wherein the different portions of which the shorting bar (16) is comprised, are formed unitarily from an elastic electrically conductive material.

## Patentansprüche

1. In einem Fahrzeug angebrachter Drehverbinder mit einem Paar Gehäuseeinrichtungen (1, 2), die zur Bildung eines Kabelaufnahmeraums (3) konzentrisch angeordnet sind und relativ drehbar miteinander verbunden sind, und mit einer Mehrzahl flexibler Kabel (4, 5), die in dem Kabelaufnahmeraum aufwickelbar und abwickelbar untergebracht sind und an ihren beiden Enden in dem Paar der Gehäuseeinrichtungen festgelegt sind;
**dadurch gekennzeichnet, daß** eine Mehrzahl von Leitern (11), die einer Mehrzahl von in einem Kraftfahrzeug untergebrachten Mehrzahl von Airbag-Schaltungen entspricht, kollektiv in einem der flexiblen Kabel (4) angeordnet ist.

2. In einem Fahrzeug angebrachter Drehverbinder nach Anspruch 1
wobei die Airbag-Schaltungsleiter (11) für zwei-Schaltkreise kollektiv in einem der flexiblen Kabel (4) angeordnet sind.

3. In einem Fahrzeug angebrachter Drehverbinder nach Anspruch 1,
wobei die Airbag-Schaltungsleiter (11) für drei Schaltkreise kollektiv in einem der flexiblen Kabel angeordnet sind.

4. In einem Fahrzeug angebrachter Drehverbinder nach einem der Ansprüche 1 bis 3,
wobei die Mehrzahl der Airbag-Schaltungsleiter (11) einander benachbart in einem der flexiblen Kabel angeordnet ist.

5. In einem Fahrzeug angebrachter Drehverbinder nach einem der Ansprüche 1 bis 4,
wobei zwischen der Mehrzahl der Airbag-Schaltungsleiter (11) weitere Schaltungsleiter (12) angeordnet sind und wobei eine Gruppe der Leiter in einem der flexiblen Kabel (4) angeordnet ist.

6. In einem Fahrzeug angebrachter Drehverbinder nach einem der Ansprüche 1 bis 5,
wobei die vorstehend genannte Mehrzahl von Airbag-Schaltungsleitern (11), die in einem flexiblen Kabel (4) angeordnet sind, aus derselben Anzahl von Leitern (11a) auf der positiven Seite wie in einem Kraftfahrzeug angebrachten Airbag-Schaltungen sowie aus einer geringeren Anzahl von Leitern (11b) auf der negativen Seite gebildet ist.

7. In einem Fahrzeug angebrachter Drehverbinder nach einem der Ansprüche 1 bis 6,
wobei ein Leitblock (14) mit Verbindungsanschlüssen (14a) zum Anschließen eines externen Verbinders an den Endbereich des flexiblen Kabels (4) versehen ist und wobei der Leitblock an einem bestimmten Bereich der Gehäuseeinrichtung angebracht ist.

8. In einem Fahrzeug angebrachter Drehverbinder nach einem der Ansprüche 1 bis 7,
wobei in dem Leitblock ein Kurzschlußbügel (16) angebracht ist, der die Verbindungsanschlüsse (14a) kontaktiert, um dadurch ein elektrisches Laden des flexiblen Kabels zu verhindern.

9. In einem Fahrzeug angebrachter Drehverbinder nach Anspruch 8,
wobei der Kurzschlußbügel (16) mit jedem der Mehrzahl von Verbindungsanschlüssen (14a) in Kontakt gehalten ist, mit dem die Airbag-Schaltungsleiter (11) verbunden sind.

10. In einem Fahrzeug angebrachter Drehverbinder nach Anspruch 8 oder 9,
wobei die verschiedenen Bereiche, aus denen der Kurzschlußbügel (16) besteht, einheitlich aus einem elastischen, elektrisch leitfähigen Material gebildet sind.

## Revendications

1. Connecteur rotatif monté sur un véhicule, comprenant :
une paire de boîtiers (1, 2) agencés de manière concentrique pour définir un espace (3) de logement de câbles et connectés relativement à rotation, et une pluralité de câbles souples (4, 5) rangés dans un état enroulable et déroulable dans ledit espace de logement de câbles et fixés en leurs deux extrémités dans ladite paire de boîtiers;
**caractérisé en ce qu'**une pluralité de conducteurs (11) correspondant à une pluralité de circuits de coussins gonflables montés dans un véhicule à moteur sont agencés collectivement dans l'un desdits câbles souples (4).

2. Connecteur rotatif monté sur un véhicule selon la revendication 1, dans lequel lesdits conducteurs (11) de circuits de coussins gonflables pour deux circuits sont agencés collectivement dans l'un desdits câbles souples (4).

3. Connecteur rotatif monté sur un véhicule selon la revendication 1, dans lequel lesdits conducteurs (11) de circuits de coussins gonflables pour trois circuits sont agencés collectivement dans l'un desdits câbles souples.

4. Connecteur rotatif monté sur un véhicule selon l'une quelconque des revendications 1 à 3, dans lequel ladite pluralité de conducteurs (11) de circuits de coussins gonflables sont mutuellement agencés de façon adjacente dans l'un desdits câbles souples.

5. Connecteur rotatif monté sur un véhicule selon l'une quelconque des revendications 1 à 4, dans lequel, entre ladite pluralité de conducteurs (11) de circuits de coussins gonflables, sont intercalés d'autres conducteurs (12) de circuits, et un groupe desdits conducteurs est agencé dans l'un desdits câbles souples (4).

6. Connecteur rotatif monté sur un véhicule selon l'une quelconque des revendications 1 à 5, dans lequel ladite pluralité de conducteurs (11) de circuits de coussins gonflables agencés dans un câble souple (4) mentionné ci-dessus comprennent le même nombre de conducteurs côté positif (11a) que lesdits circuits de coussins gonflables montés dans un véhicule à moteur, et un nombre inférieur de conducteurs côté négatif (11b).

7. Connecteur rotatif monté sur un véhicule selon l'une quelconque des revendications 1 à 6, dans lequel un bloc conducteur (14) est muni de bornes de connexion (14a) pour connecter un connecteur externe à la partie d'extrémité dudit câble souple (4), et ledit bloc conducteur est attaché à une partie donnée dudit boîtier.

8. Connecteur rotatif monté sur un véhicule selon l'une quelconque des revendications 1 à 7, dans lequel, dans ledit bloc conducteur, est installée une barrette de mise en court-circuit (16) qui touche lesdites bornes de connexion, pour empêcher de ce fait la création d'une charge électrique dans ledit câble souple.

9. Connecteur rotatif monté sur un véhicule selon la revendication 8, dans lequel ladite barrette de mise en court-circuit (16) est maintenue en contact avec chacune des bornes de ladite pluralité de bornes de connexion (14a) auxquelles sont connectés lesdits conducteurs (11) de circuits de coussins gonflables.

10. Connecteur rotatif monté sur un véhicule selon la revendication 8 ou 9, dans lequel les différentes parties dont est constituée la barrette de mise en court-circuit (16) sont formées unitairement à partir d'un matériau élastique électriquement conducteur.
